# EUROPÄISCHE PATENTSCHRIFT

(11) **EP 0 924 622 B1**
(45) Veröffentlichungstag und Bekanntmachung des Hinweises auf die Patenterteilung: **12.11.2003**
(21) Anmeldenummer: 98204256.6
(22) Anmeldetag: 15.12.1998
(51) Int. Cl.: H04B 1/20

(54) **Verfahren zum Übertragen eines asynchronen Datenstroms über einen synchronen kontinuierlichen Datenbus sowie Schaltungsanordnung zur Durchführung des Verfahrens**
Method for transferring an asynchronous data stream on a synchronous and continuous data bus and circuit for implementing this method
Procédé de transfert d'un flux asynchrone de données sur un bus synchrone et continue ainsi qu'un circuit pour la mise en oeuvre de ce procédé.

(30) Priorität: 22.12.1997 DE 19757195
(43) Veröffentlichungstag der Anmeldung: 23.06.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Höfers, Thorsten, Röntgenstrasse 24, 22335 Hamburg (DE); Knobl, Karl-Heinz, Röntgenstrasse 24, 22335 Hamburg (DE); Schäfer, Michael, Röntgenstrasse 24, 22335 Hamburg (DE)
(74) Vertreter: Peters, Carl Heinrich, Dipl.-Ing.

(56) Entgegenhaltungen:
- EP-A- 0 519 111
- EP-A- 0 797 325
- US-A- 5 621 895
- COMMUNICATION & CONTROL ELECTRONICS: "PLUS POINTS FOR D2B OPTICAL - C&C ELECTRONICS INTRODUCED 2ND GENERATION D2B OPTICAL INTEGRATED CIRCUITS" INTERNET CITATION, 24. Oktober 1997 (1997-10-24), XP002082400

## Beschreibung

Die Erfindung bezieht sich auf ein Verfahren zum Übertragen eines Nutzdaten aufweisenden asynchronen Datenstroms über einen synchronen Datenbus, der zur Übertragung von im Zeitmultiplex angeordneten Datenrahmen vorgesehen ist, sowie eine Schaltungsanordnung zur Durchführung des Verfahrens.

Aus dem im Internet unter der Adresse www.candc.co.uk/pages/news/firstpressrelease.htm veröffentlichen Dokument von C&C Etectronics geht hervor, dass der synchrone 12S Bus sowohl zur Übertragung von Audiodaten als auch zur Übertragung von Steuerinformationen dient. Das Dokument zeigt aber nicht wie die Steuerinformationen über den 12S Bus übertragen werden.

Derartige Verfahren sind beispielsweise in Adam Osborne, Einführung in die Mikrocomputer-Technik, Seite 5-34 ff beschrieben. Um die unterschiedliche Geschwindigkeit des asynchronen Datenstroms an eine synchrone Datenübertragung anzupassen, verwenden die bekannten Verfahren Synchronisationszeichen. Falls der asynchrone Datensender keine Daten mehr zur Übertragung vorliegen hat, wird der Datenstrom mit Synchronisationszeichen aufgefüllt, bis die nächsten gültigen Nachrichten zur Übertragung bereitstehen. Bei dieser Form der synchronen seriellen Datenübertragung muß der Mikroprozessor des Datensenders ständig die Synchronisationszeichen erzeugen, und der Mikroprozessor des Datenempfängers muß kontinuierlich die empfangenen Daten mitlesen und die Synchronisationszeichen interpretieren. Daher beanspruchen diese bekannten Verfahren eine große Rechenkapazität der Mikroprozessoren der Datensender und der Datenempfänger.

Es ist Aufgabe der Erfindung, ein anderes Verfahren der eingangs genannten Art sowie eine Schaltungsanordnung zur Durchführung des Verfahrens aufzuzeigen, welches die Rechenkapazität der Mikroprozessoren der Datensender und der Datenempfänger weniger beansprucht.

Diese Aufgabe ist für das Verfahren erfindungsgemäß dadurch gelöst, daß der asynchrone Datenstrom mittels einer Wandlerschaltung in einen synchronen, kontinuierlichen Datenstrom umgewandelt wird, daß für die Nutzdaten des asynchronen Datenstromes innerhalb der Datenrahmen eine vorgebbare Anzahl von Speicherplätzen vorgesehen ist, daß den einzelnen Datenrahmen mittels der Wandlerschaltung in Abhängigkeit der Geschwindigkeit des asynchronen Datenstroms eine variierbare Anzahl von Nutzdaten zuordbar ist, und daß den einzelnen Datenrahmen mittels der Wandlerschaltung jeweils an einer vorbestimmten Position innerhalb der Datenrahmen Protokolldaten zugeordnet werden, die Informationen über die Anzahl der in dem jeweiligen Datenrahmen enthaltenen Nutzdaten aufweisen.

Die Nutzdaten des asynchronen Datenstromes werden mittels der Wandlerschaltung in die Datenrahmen des synchronen kontinuierlichen Datenbusses eingeordnet. Die Anzahl der Speicherplätze, die innerhalb der einzelnen Datenrahmen für die Nutzdaten des asynchronen Datenstroms vorgesehen ist, kann entsprechend der jeweiligen Applikation, in der die Wandlerschaltung eingesetzt wird, unterschiedlich sein. Es ist sowohl möglich, daß nur ein sehr kleiner Anteil der Kapazität des synchronen Datenbusses für die Nutzdaten des asynchronen Datenstroms vorgesehen ist, es kann jedoch auch möglich sein, daß die gesamte Kapazität des synchronen Datenbusses für die Nutzdaten des asynchronen Datenstroms zur Verfügung steht. Die Anzahl der Speicherplätze, die je nach Applikation für die Nutzdaten des asynchronen Datensstromes innerhalb der einzelnen Datenrahmen vorgesehen ist, läßt sich mittels der Wandlerschaltung flexibel einstellen. Die Datenrahmen weisen eine feste Datengröße auf und werden seriell im Zeitmultiplex über den synchronen Datenbus übertragen.

Die Menge der asynchronen Nutzdaten, die der Wandlerschaltung pro Zeiteinheit zugeführt wird, variiert in Abhängigkeit der Geschwindigkeit des asynchronen Datenstroms. Die Wandlerschaltung sorgt für eine zeitliche Entkopplung des asynchronen Datenstroms und des synchronen Datenstroms, beispielsweise mittels eines FIFOs. Als FIFO wird ein "First In-First Out" Schieberegister bezeichnet.

Solange genügend Nutzdaten des asynchronen Datenstroms in der Wandlerschaltung vorliegen, werden die für den asynchronen Datenstrom vorgesehenen Speicherplätze innerhalb der Datenrahmen mit Nutzdaten aufgefüllt. Liegen weniger Nutzdaten vor, als Speicherplätze in den jeweiligen Datenrahmen vorgesehen sind, so werden die nicht benötigten, für den asynchronen Datenstrom vorgesehenen Speicherplätze mittels der Wandlerschaltung mit definierbaren Werten, beispielsweise Nullen, aufgefüllt. Liegen momentan gar keine Nutzdaten vor, so werden alle Speicherplätze beispielsweise mit Nullen aufgefüllt. Die Anzahl der jeweils gültigen Nutzdaten, die einem Datenrahmen zugeordnet werden, werden mittels der Wandlerschaltung gezählt und als Protokolldaten dem jeweiligen Datenrahmen an einer vorbestimmten Position zugefügt. Mittels dieser Protokolldaten weist somit jeder Datenrahmen eine Information auf, wieviel gültige Nutzdaten des asynchronen Datenstroms in diesem Datenrahmen enthalten sind. Da zudem auch die Position der für den asynchronen Datenstrom vorgesehenen Speicherplätze innerhalb der Datenrahmen vorgegeben ist, sind die gültigen Nutzdaten innerhalb der jeweiligen Datenrahmen mittels der Protokolldaten eindeutig identifizierbar. Dem Empfänger muß lediglich das gewählte Übertragungsformat bekannt sein, d.h. er muß die Position und die Anzahl der Speicherplätze kennen, die für die Nutzdaten des asynchronen Datenstroms vorgesehen sind, und er muß wissen, wo die Protokolldaten innerhalb der Datenrahmen positioniert sind. Mit Hilfe dieser Informationen kann der Empfänger die gültigen Nutzdaten aus den jeweiligen Datenrahmen herausfiltern und weiterverarbeiten.

Die Umwandlung der asynchronen Daten in synchronen Daten bzw. die Rückwandlung der übertragenen synchronen Daten in asynchrone Daten erfolgt jeweils mittels einer Wandlerschaltung. Daher wird der Mikroprozessor des die asynchronen Nutzdaten generierenden Senders und der Mikroprozessor des die asynchronen Nutzdaten verarbeitenden Empfängers durch die Umwandlung nicht belastet.

Eine vorteilhafte Ausgestaltung des Verfahrens ist gekennzeichnet durch die Merkmale des Anspruchs 2. Diese Ausführungsform hat den Vorteil, daß Nutzdaten verschiedener Kategorien mittels der Protokolldaten von einem Empfänger unterschieden werden können. Es ist beispielsweise möglich, die Nutzdaten in Informationsdaten und in Kontrolldaten zu unterscheiden. Unter Kontrolldaten werden beispielsweise Daten verstanden, die bei der Übertragung von Bilddaten jeweils den Zeilenanfang bzw. das Zeilenende charakterisieren. Die Informationsdaten sind dann in diesem Beispiel die Bilddaten selbst.

Mittels der vorteilhaften Ausgestaltung des Verfahrens gemäß Anspruch 3 lassen sich asynchrone Computerdaten zwischen zwei Computersystemen unter Zwischenschaltung eines synchronen Bussystems übertragen. Die erste und die zweite Wandlerschaltung sind vorzugsweise baugleich ausgeführt und mit jeweils einer Empfängereinheit und einer Sendeeinheit ausgestattet. Dies ermöglicht eine bidirektionale Datenübertragung zwischen den beiden Mikroprozessoren. Dadurch, daß die erste bzw. die zweite Wandlerschaltung die Konvertierung zwischen dem asynchronen und dem synchronen Datenstrom bzw. dem synchronen und dem asynchronen Datenstrom übernimmt, wird die Rechenkapazität des ersten und des zweiten Mikroprozessors von der Konvertierung nicht beansprucht. Dies ermöglicht es, Prozessorleistung zu sparen und ein derartiges Verfahren auch mit Mikroprozessoren mit geringer Rechenleistung zu realisieren.

Gemäß der vorteilhaften Ausgestaltung nach Anspruch 4 ist der synchrone Bus ein kontinuierlicher I²-S-Bus. Der I²-S-Bus dient vornehmlich zur geräteinternen Übertragung digitalisierter Audio-Signale zwischen einzelnen integrierten Schaltungen. Die einzelnen Datenrahmen des I²-S-Busses weisen beispielsweise 64 Bit auf, aufgeteilt in einen linken Datenunterrahmen mit 32 Bit und einen rechten Datenunterrahmen mit 32 Bit.

Die der Erfindung zugrundeliegende Aufgabe ist für eine Schaltungsanordnung erfindungsgemäß dadurch gelöst, daß eine Wandlerschaltung zum Umwandeln des asynchronen Datenstroms in einen synchronen, kontinuierlichen Datenstrom vorgesehen ist, daß mittels der Wandlerschaltung den Nutzdaten des asynchronen Datenstromes innerhalb der Datenrahmen eine vorgebbare Anzahl von Speicherplätzen zuordbar ist, daß den einzelnen Datenrahmen mittels der Wandlerschaltung in Abhängigkeit der Geschwindigkeit des asynchronen Datenstroms eine variierbare Anzahl von Nutzdaten zuordbar ist, und daß den einzelnen Datenrahmen mittels der Wandlerschaltung jeweils an einer vorbestimmten Position innerhalb der Datenrahmen Protokolldaten zuordbar sind, die Informationen über die Anzahl der in dem jeweiligen Datenrahmen enthaltenen Nutzdaten aufweisen.

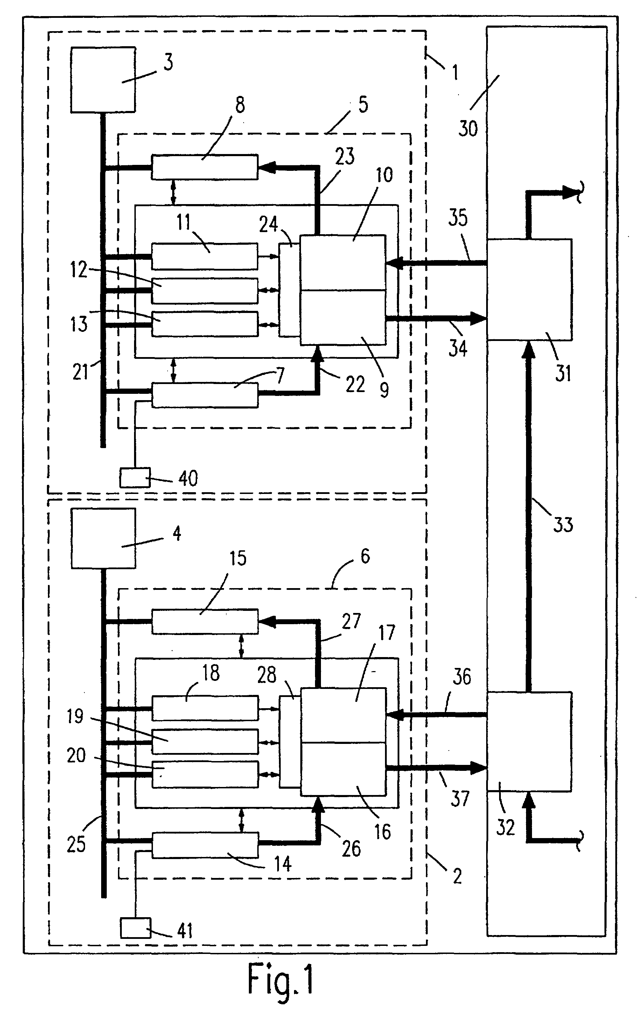

Einige schematisch dargestellte Ausführungsbeispiele der Erfindung werden nachfolgend anhand der Zeichnung in den Fig. 1 bis 4 näher erläutert. Es zeigen:
Fig. ein bidirektionales Übertragungssystem mit einem ersten Mikroprozessor, der einen asynchronen Nutzdatenstrom generiert, einer ersten Wandlerschaltung zum Umwandeln des asynchronen Nutzdatenstroms in einen synchronen Datenstrom, einem synchronen Datenbus zur Übertragung des synchronen Datenstroms, einer zweiten Wandlerschaltung zum Zurückwandeln des synchronen Datenstroms in einen asynchronen Datenstrom und einem zweiten Mikroprozessor zum Verarbeiten des zurückgewandelten asynchronen Datenstroms.
Fig. 2 einen 64 Bit breiten Datenrahmen eines I²-S Busses,
Fig. 3 eine Tabelle mit vier verschiedene Möglichkeiten, um die Speicherkapazität eines Datenrahmens eines I²-S Busses gemäß Fig. 2 fiir die Datenübertragung zwischen dem ersten Mikroprozessor und dem zweiten Mikroprozessor gemäß Fig. 1 zu nutzen,
Fig. 4a einen Datenrahmen gemäß Zeile 63 der Tabelle aus Fig. 3, der fünf Nutzdatenworte enthält,
Fig. 4b einen Datenrahmen gemäß Zeile 63 der Tabelle aus Fig. 3, der zwei Nutzdatenworte enthält,
Fig. 4c ein dem Datenrahmen gemäß Fig. 4a zugeordnetes Protokollwort,
Fig. 4d ein dem Datenrahmen gemäß Fig. 4b zugeordnetes Protokollwort,

Fig. 1 zeigt ein bidirektionales Übertragungssystem, welches ein erstes Mikrocomputer-System 1 und ein zweites Mikrocomputer-System 2 aufweist. Das erste Mikrocomputer-System 1 weist einen ersten Mikroprozessor 3 und das zweite Mikrocomputer-Sysstem 2 einen zweiten Mikroprozessor 4 auf. Das erste Mikrocomputer-System 1 weist eine erste Wandlerschaltung 5 und das zweite Mikrocomputer-System 2 eine zweite Wandlerschaltung 6 auf. Die erste Wandlerschaltung 5 weist ein erstes Sende-FIFO 7, ein erstes Empfangs-FIFO 8, ein erstes Sendeelement 9, ein erstes Empfangselement 10, ein erstes Konfigurationselement 11, ein erstes Steuerelement 12 und ein erstes Bypass-Element 13 auf. Die zweite Wandlerschaltung 6 weist ein zweites Sende-FIFO 14, ein zweites Empfangs-FIFO 15, ein zweites Sendelement 16, ein zweites Empfangselement 17, ein zweites Konfigurationselement 18, ein zweites Steuerelement 19 und ein zweites Bypass-Element 20 auf. Der erste Mikroprozessor 3 ist mittels einer 8 Bit breiten parallelen Datenbusleitung 21 mit dem ersten Sende-FIFO 7, dem ersten Empfangs-FIFO 8, dem ersten Konfigurationselement 11, dem ersten Steuerelement 12 und dem ersten Bypass-Element 13 gekoppelt. Der Ausgang des ersten Sende-FIFOs 7 ist mittels einer 9 Bit breiten parallelen Datenleitung 22 mit dem ersten Sendelement 9 gekoppelt. Das erste Empfangselement 10 ist mittels einer 9 Bit breiten parallelen Datenleitung mit dem Eingang des ersten Empfangs-FIFOs 8 gekoppelt. Das erste Konfigurationselement 11, das erste Steuerelement 12, das erste Bypass-Element 13 sowie das erste Sendelement 9 und das erste Empfangselement 10 sind mittels Steuerleitungen 24 miteinander gekoppelt.

Der zweite Mikroprozessor 4 ist mittels einer 8 Bit breiten Datenleitung 25 mit dem Eingang des zweiten Sende-FIFOs 14, dem Ausgang des zweiten Empfangs-FIFOs 15 sowie mit dem zweiten Konfigurationselement 18, dem zweiten Steuerelement 19 und dem zweiten Bypass-Element 20 gekoppelt.

Der Ausgang des zweiten Sende-FIFOs 14 ist mittels einer 9 Bit breiten parallelen Datenleitung 26 mit dem zweiten Sendeelement 16 gekoppelt. Das zweite Empfangselement 17 ist mittels einer 9 Bit breiten parallelen Datenleitung 27 mit dem zweiten Empfangs-FIFO 15 gekoppelt. Das zweite Konfigurationselement 18, das zweite Steuerelement 19 und das zweite Bypass-Element 20 sowie das zweite Sendeelement 16 und das zweite Empfangselement 17 sind mittels Steuerleitungen 28 miteinander gekoppelt.

Es ist ein optisches Bussystem 30, beispielsweise ein D²-B-Bussystem vorgesehen, welches eine erste Schnittstelle 31 und eine zweite Schnittstelle 32 aufweist. Die erste Schnittstelle 31 und die zweite Schnittstelle 32 dienen zur Umsetzung von elektrischen Daten im I²-S-Format in optische Daten des Formats des optischen Bussystems 30. I²-S ist ein Übertragungsbus für digitale Audio-Signale. Er ist ein serieller Bus mit drei Leitungen, wobei eine Leitung für zwei Datenkanäle im Zeitmultiplex vorgesehen ist.

Das optische Bussystem 30 ist als ringförmiges System ausgebildet, an den unterschiedliche elektronische Komponenten eines Kraftfahrzeugs angeschlossen sind. Mögliche Komponenten, die an den optischen Bus 30 anschließbar sind, sind z.B. ein CD-Wechsler, ein Telefon, ein Navigationssystem, ein Leistungsverstärker, ein Display sowie eine Radio-Steuereinheit.

Die erste Schnittstelle 31 und die zweite Schnittstelle 32 sind über ein Teilstück 33 des optischen Bussystems 30 miteinander gekoppelt. Die erste Schnittstelle 31 ist mittels einer I²-S-Leitung 35 mit dem ersten Empfangselement 10 des ersten Mikrocomputer-Systems 1 gekoppelt und mittels einer I²-S-Leitung 34 mit dem ersten Sendeelement 9 des ersten Mikrocomputer-Systems 1. Die zweite Schnittstelle 32 des optischen Bussystems 30 ist mittels einer I²-S-Leitung 36 mit dem zweiten Empfangselement 17 des zweiten Mikrocomputer-Systems 2 und mittels einer I²-S-Leitung 37 mit dem zweiten Sendelement 16 des zweiten Mikrocomputer-Systems 2 gekoppelt.

Das erste Mikrocomputer-System 1 stellt beispielsweise einen Navigationsrechner eines Navigationssystems eines Kraftfahrzeuges dar, welches Navigationsdaten an ein Display übertragen soll. Das Display wird durch das Mikrocomputer-System 2 repräsentiert. Die Navigationsdaten des Mikrocomputer-Systems -Systems 1 sind asynchron und treten mit hoher Bandbreite auf. Das optische Bussystem 30 ist jedoch nur für die Übertragung serieller, kontinuierlicher, synchroner Daten geeignet. Zur Anbindung an elektrische Geräte stehen die erste Schnittstelle 31 und die zweite Schnittstelle 32 zur Verfügung, welche elektrische Daten gemäß dem I²-S-Standard in die optischen Daten des Bussystems 30 umsetzt.

Nachfolgend soll die Funktionsweise des der Erfindung zugrundeliegenden Verfahrens anhand der Übertragung von Navigationsdaten des ersten Mikrocomputer-Systems 1 an das zweite Mikrocomputer-System 2 erläutert werden. Die asynchronen Navigationsdaten werden von dem ersten Mikroprozessor 3 über die 8 Bit breite Datenleitung 21 an das erste Sende-FIFO 7 geliefert. Das erste Sende-FIFO 7 ist 9 Bit breit und dient zur zeitlichen Entkopplung zwischen dem ersten Mikrocomputer-System 1 und dem Bussystem 30. Die 8 Bit breite Datenleitung 21 ist direkt an die ersten acht Eingänge des ersten Sende-FIFOs 7 angeschlosssen. Der neunte Eingang des Sende-FIFOs 7 ist mit dem Ausgang eines Adreß-Decoders 40 verbunden. Je nachdem, welche Adresse der Anwender zum Einschreiben eines 8 Bit-Datenwortes in das erste Sende-FIFO 7 benutzt, wird dem Datenwort ein zusätzliches neuntes Bit zugeführt. Welchen Status dieses neunte Bit besitzt, hängt von der Adresse ab. Somit hat der Anwender die Möglichkeit, die Datenworte in zwei Kategorien zu unterteilen, z.B. in Kontrolldaten, die den Anfang und das Ende eines Datenblocks markieren, und in Informationsdaten, die in diesem Datenblock enthalten sind. In entsprechender Weise ist die 8 Bit breite Datenleitung des zweiten Mikrocomputer-Systems 2 direkt an die ersten acht Eingänge des zweiten Sende-FIFOs 14 angeschlossen, und der neunte Eingang des Sende-FIFOs 14 ist mit dem Ausgang eines Adreß-Decoders 41 verbunden.

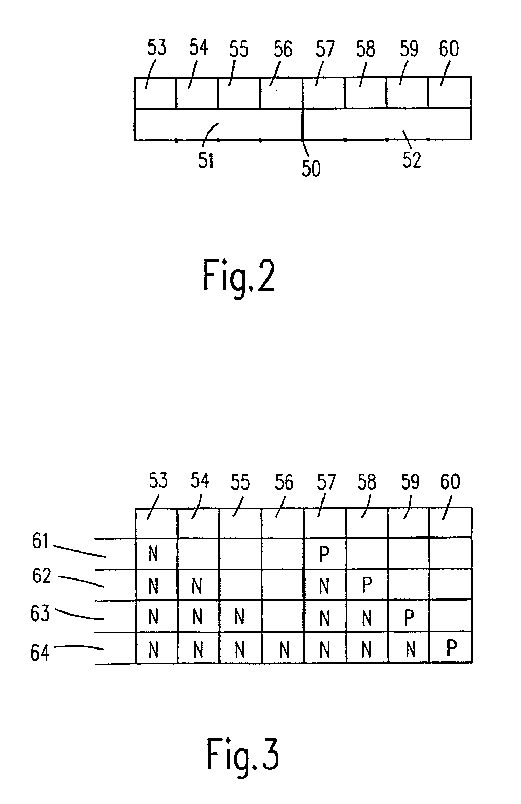

Die parallelen Daten des ersten Sende-FIFOs 7 werden dem ersten Sendeelement 9 zugeführt, welches mittels eines nicht näher dargestellten Parallel-Seriell-Schieberegisters die parallelen Daten in einen seriellen Datenstrom umwandelt. Diese Umwandlung soll nachfolgend anhand der Fig. 2 bis 4 näher erläutert werden.

Fig. 2 zeigt einen 64 Bit breiten Datenrahmen 50, der gemäß dem I²-S-Standard ausgebildet ist. Der I²-S-Datenrahmen 50 ist aufgeteilt in einen linken Kanal 51 und einen rechten Kanal 52. Der linke Kanal 51 ist aufgeteilt in ein erstes Datenwort 53, ein zweites Datenwort 54, ein drittes Datenwort 55 und ein viertes Datenwort 56. Der rechte Kanal 52 ist aufgeteilt in eine fünftes Datenwort 57, ein sechstes Datenwort 58, ein siebtes Datenwort 59 und ein achtes Datenwort 60. Die Datenworte 53 bis 60 umfassen jeweils ein Byte.

Fig. 3 zeigt in Form einer Tabelle vier verschiedene Möglichkeiten, um den Datenrahmen 50 für die Datenübertragung zwischen dem ersten Mikrocomputer-System 1 und dem zweiten Mikrocomputer-System 2 gemäß Fig. 1 zu nutzen. Dargestellt sind jeweils die acht Datenworte 53 bis 60 eines Datenrahmens 50, wobei die Datenworte 53 bis 60 jeweils in unterschiedlicher Weise für die Datenübertragung zwischen dem ersten Mikrocomputer-System 1 und dem zweiten Mikrocomputer-System 2 genutzt werden. Bei dem Beispiel gemäß Zeile 61 der Tabelle stehen von den acht Datenworten 53 bis 60 nur das erste Datenwort 53 und das fünfte Datenwort 57 für die Übertragung zwischen dem ersten Mikrocomputer-System 1 und dem zweiten Mikrocomputer-System 2 zur Verfügung. Das erste Datenwort 53 wird fiir Nutzdaten N des ersten Mikrocomputer-Systems 1 bzw. des zweiten Mikrocomputer-Systems 2 genutzt, während das fünfte Datenwort 57 ein Protokollwort P ist, welches Protokolldaten enthält.

Bei dem Beispiel gemäß Zeile 62 der Tabelle in Fig. 3 stehen das erste Datenwort 53, das zweite Datenwort 54, das fünfte Datenwort 57 und das sechste Datenwort 58 für die Übertragung zwischen dem ersten Mikrocomputer-System 1 und dem zweiten Mikrocomputer-System 2 zur Verfügung. Das erste Datenwort 53, das zweite Datenwort 54 und das dritte Datenwort 57 stehen zur Übertragung von Nutzdaten N zur Verfügung, während das sechste Datenwort 58 ein Protokollwort P mit Protokolldaten ist.

Bei dem Beispiel gemäß Zeile 63 der Tabelle in Fig. 3 stehen das erste Datenwort 53, das zweite Datenwort 54, das dritte Datenwort 55, das fünfte Datenwort 57, das sechste Datenwort 58 sowie das siebte Datenwort 59 für die Übertragung von Daten zwischen dem ersten Mikrocomputer-System 1 und dem zweiten Mikrocomputer-System 2 zur Verfügung. Das erste Datenwort 53, das zweite Datenwort 54, das dritte Datenwort 55, das fünfte Datenwort 57 sowie das sechste Datenwort 58 sind zur Übertragung von Nutzdaten N vorgesehen, während das siebte Datenwort 59 ein Protokollwort P mit Protokolldaten ist.

Bei dem Beispiel gemäß Zeile 64 wird die gesamte Kapazität des I²-S-Datenrahmens 50 und somit alle Datenworte 53 bis 60 für die Übertragung von Daten zwischen dem ersten Mikrocomputer-System 1 und dem zweiten Mikrocomputer-System 2 zur Verfügung. Die Datenworte 53 bis 59 stehen für die Übertragung von Nutzdaten N zur Verfügung, während das achte Datenwort 60 ein Protokollwort P mit Protokolldaten ist.

Das Protokollwort P teilt jeweils dem Empfänger mit, wieviele gültige Datenwörter mit Nutzdaten in einem Datenrahmen vorhanden sind. Außerdem enthält das Protokollwort Informationen darüber, ob es sich bei den Nutzdaten um Informationsdaten oder Kontrolldaten handelt. Das Protokollwort ist in jedem Datenrahmen 50 vorhanden und beinhaltet nur Informationen über die Datenwörter, die sich speziell in diesem Datenrahmen befinden.

Bei dem Beispiel gemäß Zeile 61 aus Fig. 3 können die Datenworte 54, 55, 56, *58,* 59 und 60 des Datenrahmens 50 für die Übertragung zwischen anderen Komponenten des Bussystems 30 genutzt werden. Bei dem Beispiel gemäß Zeile 62 können die Datenworte 55, 56, 59 und 60 für die Datenübertragung zwischen anderen Komponenten des optischen Bussystems 30 genutzt werden. Bei dem Beispiel gemäß Zeile 63 können lediglich das vierte Datenwort 56 und das achte Datenwort 60 für die Datenübertragung zwischen anderen Buskomponenten des optischen Bussystems 30 genutzt werden.

Die Anzahl der Datenworte, die für die Übertragung zwischen dem ersten Mikrocomputer-System 1 und dem zweiten Mikrocomputer-System 2 innerhalb der einzelnen Datenrahmen 50 zur Verfügung steht, läßt sich mittels des ersten Konfigurationselementes 11 der ersten Wandlerschaltung 5 bzw. des zweiten Konfigurationselementes 18 der zweiten Wandlerschaltung 6 je nach Applikation variabel einstellen. Vorzugsweise wird diese Einstellung entsprechend der jeweiligen Applikation fest eingestellt und während des Betriebs der Schaltung nicht mehr verändert. Es ist jedoch auch möglich, die Anzahl der für die Datenübertragung zwischen dem ersten Mikrocomputer-System 1 und dem zweiten Mikrocomputer-System 2 zur Verfügung stehenden Datenworte während des Betriebs zu verändern.

Mittels des ersten Steuerelementes 12 und des zweiten Steuerelementes 19 können die einzelnen Schreib- und Leseoperationen der ersten Wandlerschaltung 5 bzw. der zweiten Wandlerschaltung 6 gesteuert werden. Das erste Steuerelement 12 und das zweite Steuerelement 19 weisen Register auf, welche dem ersten Mikrocomputer-System 1 bzw. dem zweiten Mikrocomputer-System 2 Informationen über den Zustand bzw. den Status der Datenübertragung zwischen dem ersten Mikrocomputer-System 1 und dem zweiten Mikrocomputer-System 2 mitteilen. Mittels des ersten Bypass-Elementes 13 und des zweiten Bypass-Elementes 20 lassen sich Bypass-Daten, die eine höhere Priorität haben, bevorrechtigt übertragen. Das erste Bypass-Element 13 und das zweite Bypass-Element 20 weisen nicht näher dargestellte Bypass-Register auf, welche zum Senden bzw. Empfangen von bevorrechtigten Daten vorgesehen sind. Diese bevorrechtigten Daten werden direkt unter Umgehung des ersten Sende-FIFOs 7, des zweiten Sende-FIFOs 14, des ersten Empfangs-FIFOs 8 bzw. des zweiten Empfangs-FIFOs 15 an das erste Sendeelement 9, das zweite Sendeelement 16, das erste Empfangselement 10 bzw. das zweite Empfangselement 17 übertragen.

Das Protokollwort wird von dem ersten Sendeelement 9 bzw. dem zweiten Sendeelement 16 gebildet. Hierzu zählt das erste Sendelement 9 mittels einer nicht näher dargestellten Zählerschaltung die Anzahl der gültigen, Nutzdaten aufweisenden Datenbytes, die in den jeweiligen Datenrahmen 50 eingefügt wird. Hierfür stehen drei Bit der insgesamt 8 Bit des Protokollwortes P zur Verfügung. Ein weiteres Bit des Protokollwortes wird als Stopp-Bit zur automatischen Unterbrechung der Übertragung benutzt. Das Stopp-Bit kann beispielsweise dafür verwendet werden, daß der Empfänger dem Sender mitteilt, daß er die momentan gesendeten Daten nicht genügend schnell verarbeiten kann. Der Sender kann dann, falls das Stopp-Bit gesetzt ist, eine Sendepause einlegen. Die restlichen vier Bit des Protokollwortes P werden dazu verwendet, um die Datenworte, welche Nutzdaten N enthalten, in Informationsdaten und Kontrolldaten zu unterscheiden. Unter Kontrolldaten werden Daten verstanden, die bei der Übertragung von Bilddaten jeweils den Zeilenanfang bzw. das Zeilenende charakterisieren. Unter Informationsdaten werden die eigentlichen Bilddaten selbst verstanden.

Der mittels der ersten Wandlerschaltung 5 gebildete serielle Datenstrom wird über die I²-S-Leitung 35 an die erste Schnittstelle 31 übertragen, welche die seriellen elektrischen Daten in serielle optische Daten umwandelt. Nachfolgend werden die seriellen Daten über das Teilstück 33 des Bussystems 30 an die zweite Schnittstelle 32 übertragen und mittels dieser seriellen Schnittstelle 32 in elektrische serielle Signale zurückgewandelt. Die seriellen elektrischen Signale werden dann mittels der I²-S-Leitung 36 an das zweite Empfangselement 17 der zweiten Wandlerschaltung 6 übertragen.

Die Rückwandlung der seriellen I²-S-Daten in asynchrone, parallele Daten erfolgt mittels der zweiten Wandlerschaltung 6. Nachdem ein Datenrahmen 50 des seriellen I²-S-Datenstromes komplett empfangen wurde, wird das Protokollwort P ausgewertet, um festzustellen, wieviele Nutzdaten N und welche Art von Nutzdaten N der jeweilige Datenrahmen enthält. Da sich das Protokollwort entsprechend der voreingestellten Datenkapazität, die für die Übertragung zwischen dem ersten Mikrocomputer-System 1 und dem zweiten Mikrocomputer-System 2 innerhalb der einzelnen Datenrahmen 50 zur Verfügung steht, immer an der gleichen Stelle befindet, kann das Protokollwort P mittels des zweiten Empfangselements 17 sehr leicht, z.B. mittels eines umschaltbaren Registers, von den übrigen Datenbytes der einzelnen I²-S-Datenrahmen 50 getrennt werden. Mittels der Informationen des jeweiligen Protokollwortes P wandelt das zweite Empfangselement 17 die Datenbytes der einzelnen Datenrahmen 50 mittels eines nicht näher dargestellten Seriell-Parallel-Schieberegisters in parallele Daten zurück und führt diese dem zweiten Empfangs-FIFO 15 zu. Der zweite Mikroprozessor 4 kann diese Daten dann mittels der 8 Bit breiten Datenleitung 25 auslesen und verarbeiten.

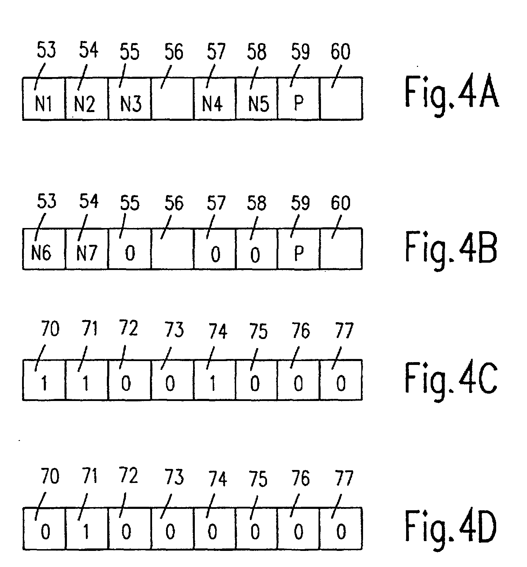

Die Bildung der einzelnen Datenrahmen 50 und des Protokollwortes P mittels des ersten Sendeelementes 9 bzw. des zweiten Sendeelementes 16 wird nachfolgend anhand der Fig. 4a bis 4d näher erläutert.

Bei dem den Fig. 4a bis 4d zugrundeliegenden Beispiel werden sieben Nutzdatenwörter N1, N2, N3, N4, N5, N6 und N7, die von dem ersten Mikroprozessors 3 gemäß Fig. 1 an das erste Sende-FIFO 7 gesendet worden sind, mittels des ersten Sendeelementes 9 in einen seriellen, synchronen, kontinuierlichen Datenstrom umgewandelt.
Die erste Wandlerschaltung 5 und die zweite Wandlerschaltung 6 sind entsprechend dem Beispiel gemäß Zeile 63 der Tabelle in Fig. 3 eingestellt. Somit stehen das erste Datenwort 53, das zweite Datenwort 54, das dritte Datenwort 55, das fünfte Datenwort 57, das sechste Datenwort 58 sowie das siebte Datenwort 59 fiir die Übertragung von Daten zwischen dem ersten Mikrocomputer-System 1 und dem zweiten Mikrocomputer-System 2 zur Verfügung.
Fig. 4a zeigt den Aufbau des ersten Datenrahmens 50, der von dem ersten Sendeelement 9 gebildet wird, und Fig. 4b zeigt den nachfolgenden Datenrahmen 50.
Gemäß Fig. 4a wird das erste Nutzdatenwort N1 dem ersten Datenwort 53 des Datenrahmens 50 zugeordnet, das zweite Nutzdatenwort N2 dem zweiten Datenwort 54, das dritte Nutzdatenwort N3 dem dritten Datenwort 55, das vierte Nutzdatenwort N4 dem fünften Datenwort 57, das fünfte Nutzdatenwort N5 dem sechsten Datenwort 58 und das Protokollwort P wird dem siebten Datenwort 59 des Datenrahmens 50 zugeordnet. Der zeitlich nachfolgende Datenrahmen 50 gemäß Fig. 4b weist die beiden restlichen Nutzdatenwörter N6 und N7 auf. Das sechste Nutzdatenwort N6 wird dem ersten Datenwort 53 zugeordnet und das siebte Nutzdatenwort N7 dem zweiten Datenwort 54 des Datenrahmens 50 gemäß Fig. 4b. Da keine weiteren Nutzdaten in dem Sende-FIFO 9 gemäß Fig. 1 zur Verfügung stehen, werden nun mittels des ersten Sendeelementes 9 das dritte Datenwort 55, das fünfte Datenwort 57 und das sechste Datenwort 56 mit Nullen aufgefüllt. Das siebte Datenwort 59 des Datenrahmens 50 gemäß Fig. 4b ist erneut ein Protokollwort P.

Fig. 4c zeigt den Aufbau des Protokollwortes des Datenrahmens 50 gemäß Fig. 4a. Das Protokollwort P gemäß Fig. 4c weist ein erstes Zählbit 70, ein zweites Zählbit 71 und ein drittes Zählbit 72 auf. Ferner weist das Protokollwort P ein Stopp-Bit 73 sowie ein erstes Unterscheidungsbit 74, ein zweites Unterscheidungsbit 75, ein drittes Unterscheidungsbit 76 und ein viertes Unterscheidungsbit 77 auf. Da der Datenrahmen 50 gemäß Fig. 4a fünf Nutzdatenwörter aufweist, enthalten die Zählbits 70 bis 72 die Zählinformation "5". Dementsprechend ist das erste Zählbit 70 gleich 1, das zweite Zählbit 71 gleich 1 und das dritte Zählbit 72 gleich 0. Das Stopp-Bit 73 ist ebenfalls gleich 0, da in diesem Beispiel keine Unterbrechung der Datenübertragung angefordert ist. Das erste Unterscheidungsbit 74 ist dem ersten Datenrahmen 53 zugeordnet, das zweite Unterscheidungsbit 75 dem zweiten Datenwort 54, das dritte Unterscheidungsbit 76 dem dritten Datenwort 55 und das vierte Unterscheidungsbit 77 dem fünften Datenwort 57. Mittels dieser Unterscheidungsbits 74 bis 77 kann unterschieden werden, ob es sich bei dem jeweils zugeordneten Datenwort um ein Informationsdatenwort oder um ein Kontrolldatenwort handelt. Das erste Unterscheidungsbit 74 ist gleich 1. Dadurch soll in diesem Beispiel gekennzeichnet werden, daß es sich bei dem ersten Nutzdatenwort N1 um ein Kontrolldatenwort handelt, welches beispielsweise den Zeilenanfang bei einer Bild-Datenübertragung kennzeichnet. Die Unterscheidungsbits 75 bis 77 sind gleich 0. Dementsprechend sind die zugeordneten Nutzdatenwörter N2, N3 und N4 Informationsdatenwörter. Das fünfte Nutzdatenwort N5 ist ebenfalls ein Informationsdatenwort. Da das Protokollwort P nur 8 Bit breit ist und demgemäß für das sechste Datenwort 58 kein Unterscheidungsbit mehr zur Verfügung steht, ist das erste Sendeelement 9 so eingestellt, daß das sechste Datenwort 58 nur dann mit einem Nutzdatenwort aufgefüllt wird, falls es sich bei diesem Nutzdatenwort um ein Informationsdatenwort handelt. Liegt ein Kontrollnutzdatenwort vor, so wird dieses dem nachfolgenden Datenrahmen 50 zugeordnet und dort mit einem entsprechenden Unterscheidungsbit gekennzeichnet.

Das Protokollwort P gemäß Fig. 4d ist dem Datenrahmen 50 gemäß Fig. 4b zugeordnet. Da der Datenrahmen 50 gemäß Fig. 5b nur zwei Nutzdatenwörter N6 und N7 aufweist, geben die Zählbits 70 bis 72 die Zählinformation "2".

Dementsprechend ist das erste Zählbit 70 "0", das zweite Zählbit 71 "1" und das dritte Zählbit 72 "0". Das Stopp-Bit 73 ist ebenfalls "0", da keine Anforderung zur Unterbrechung der Datenübertragung vorliegt. Da es sich bei den Nutzdatenwörtern N6 und N7 um Informationsdatenwörter handelt, sind die Unterscheidungsbits 74 und 75 gleich "0". Da die Datenwörter 55 und 57 keine Nutzdatenwörter enthalten, sind die zugeordneten Unterscheidungsbits 76 und 77 ebenfalls gleich "0".

## Patentansprüche

1. Verfahren zum Übertragen eines Nutzdaten aufweisenden asynchronen Datenstroms über einen synchronen Datenbus, der zur Übertragung von im Zeitmultiplex angeordneten Datenrahmen vorgesehen ist, **dadurch gekennzeichnet. daß** der asynchrone Datenstrom mittels einer Wandlerschaltung in einen synchronen, kontinuierlichen Datenstrom umgewandelt wird, daß für die Nutzdaten des asynchronen Datenstromes innerhalb der Datenrahmen eine vorgebbare Anzahl von Speicherplätzen vorgesehen ist, daß den einzelnen Datenrahmen mittels der Wandlerschaltung in Abhängigkeit der Geschwindigkeit des asynchronen Datenstroms eine variierbare Anzahl von Nutzdaten zuordbar ist, und daß den einzelnen Datenrahmen mittels der Wandlerschaltung jeweils an einer vorbestimmten Position innerhalb der Datenrahmen Protokolldaten zugeordnet werden, die Informationen über die Anzahl der in dem jeweiligen Datenrahmen enthaltenen Nutzdaten aufweisen.

2. Verfahren nach Anspruch 1, **dadurch gekennzeichnet, daß** die Protokolldaten Informationen über die Art der Nutzdaten enthalten.

3. Verfahren nach Anspruch 1, **dadurch gekennzeichnet, daß** der asynchrone Datenstrom von einem ersten Mikroprozessor generiert wird, mittels einer ersten Wandlerschaltung in einen synchronen, kontinuierlichen Datenstrom umgewandelt wird, über den synchronen Datenbus übertragen wird, mittels einer zweiten Wandlerschaltung in einen asynchronen Datenstrom rückgewandelt wird und einem zweiten Mikroprozessor zugeführt wird.

4. Verfahren nach Anspruch 1, **dadurch gekennzeichnet, daß** der synchrone Bus ein kontinuierlicher I²S-Bus ist.

5. Verfahren nach Anspruch 1, **dadurch gekennzeichnet, daß** mittels der Wandlerschaltung Bypassdaten des asynchronen Datenstroms, die eine erhöhte Priorität haben, mittels eines Bypassregisters zeitlich bevorzugt in den synchronen Datenstrom einfügbar sind.

6. Schaltungsanordnung zum Übertragen eines Nutzdaten aufweisenden asynchronen Datenstroms über einen synchronen Datenbus, der zur Übertragung von im Zeitmultiplex angeordneten Datenrahmen vorgesehen ist, **dadurch gekennzeichnet, daß** eine Wandlerschaltung zum Umwandeln des asynchronen Datenstroms in einen synchronen, kontinuierlichen Datenstrom vorgesehen ist, daß mittels der Wandlerschaltung den Nutzdaten des asynchronen Datenstromes innerhalb der Datenrahmen eine vorgebbare Anzahl von Speicherplätzen zuordbar ist, daß den einzelnen Datenrahmen mittels der Wandlerschaltung in Abhängigkeit der Geschwindigkeit des asynchronen Datenstroms eine variierbare Anzahl von Nutzdaten zuordbar ist, und daß den einzelnen Datenrahmen mittels der Wandlerschaltung jeweils an einer vorbestimmten Position innerhalb der Datenrahmen Protokolldaten zuordbar sind, die Informationen über die Anzahl der in dem jeweiligen Datenrahmen enthaltenen Nutzdaten aufweisen.

7. Elektronisches System, insbesondere Navigationssystem, mit einer Schaltungsanordnung nach Anspruch 6, aufweisend
- einen ersten Mikroprozessor, der einen asynchronen Nutzdatenstrom generiert,
- eine erste Wandlerschaltung zum Umwandeln des asynchronen Nutzdatenstroms in einen synchronen Datenstrom,
- einen synchronen, kontinuierlichen Datenbus, inbesondere einen I²S-Bus, zur Übertragung des synchronen Datenstroms,
eine zweite Wandlerschaltung zum Zurückwandeln des synchronen Datenstroms in einen asynchronen Datenstrom
und einen zweiten Mikroprozessor zum Verarbeiten des zurückgewandelten asynchronen Datenstroms.

8. Elektronisches System nach Anspruch 7, **dadurch gekennzeichnet, daß** der erste Mikroprozessor einem Navigationsrechner eines Navigationssystems zugeordnet ist, der asynchrone Bilddaten generiert, daß der Datenbus ein optischer Bus ist, und daß der zweite Mikroprozessor einer Anzeigevorrichtung eines Navigationssystems zugeordnet ist.

9. Kraftfahrzeug mit einer Schaltungsanordnung nach Anspruch 6.

10. Verwendung des Verfahrens nach Anspruch 1 zur Übertragung von asynchronen Bilddaten zwischen einem Navigationsrechner eines Navigationssystems und einer Anzeigevorrichtung eines Navigationssystems.

## Claims

1. A method for the transmission of an asynchronous data stream, containing useful data, via a synchronous data bus which is arranged to transmit data frames in time multiplex, **characterized in that** the asynchronous data stream is converted into a synchronous, continuous data stream by means of a converter circuit, that within the data frames a selectable number of storage locations is provided for the useful data of the asynchronous data stream, that a variable number of useful data can be assigned to the individual data frames by means of the converter circuit and in dependence on the speed of the asynchronous data stream, and that protocol data is assigned to the individual data frames, via the converter circuit, each time in a predetermined position within the data frames, which protocol data contains information as regards the number of useful data contained in the relevant data frame.

2. A method as claimed in Claim 1, **characterized in that** the protocol data contains information as regards the type of useful data.

3. A method as claimed in Claim 1, **characterized in that** the asynchronous data stream is generated by a first microprocessor, is converted into a synchronous, continuous data stream by means of a first converter circuit, is transmitted via the synchronous data bus, is converted into an asynchronous data stream again by means of a second converter circuit, and is applied to a second microprocessor.

4. A method as claimed in Claim 1, **characterized in that** the synchronous bus is a continuous I²-S bus.

5. A method as claimed in Claim 1, **characterized in that** bypass data of higher priority of the asynchronous data stream can be inserted into the synchronous data stream with temporal priority by way of a bypass register of the converter circuit.

6. A circuit arrangement for the transmission of an asynchronous data stream, containing useful data, via a synchronous data bus which is arranged to transmit data frames in time multiplex, a converter circuit is provided for converting the asynchronous data stream into a synchronous, continuous data stream, that a selectable number of storage locations within the data frame can be assigned to the useful data of the asynchronous data stream by the converter circuit, that a variable number of useful data can be assigned to the individual data frames by means of the converter circuit and in dependence on the speed of the asynchronous data stream, and that protocol data can be assigned to the individual data frames, via the converter circuit, each time in a predetermined position within the data frame, which protocol data contains information as regards the number of useful data contained in the relevant data frame.

7. An electronic system, notably a navigation system, which includes a circuit arrangement as claimed in Claim 6 and is provided with
- a first microprocessor which generates an asynchronous useful data stream,
- a first converter circuit for converting the asynchronous useful data stream into a synchronous data stream,
- a synchronous, continuous data bus, notably an I²-S bus, for the transmission of the synchronous data stream,
- a second converter circuit for reconverting the synchronous data stream into an asynchronous data stream, and
- a second microprocessor for processing the reconverted asynchronous data stream.

8. An electronic system as claimed in Claim 7, **characterized in that** with the first microprocessor there is associated a navigation computer of a navigation system which generates asynchronous image data, that the data bus is an optical bus, and that a display device of a navigation system is associated with the second microprocessor.

9. A vehicle comprising a circuit arrangement as claimed in Claim 6.

10. Application of the method of Claim 1 for the transmission of asynchronous image data between a navigation computer of a navigation system and a display system of a navigation system.

## Revendications

1. Procédé de transmission d'un flux asynchrone de données présentant des données utiles par l'intermédiaire d'un bus synchrone de données qui est prévu pour la transmission de cadres de données disposés dans le multiplex temporel, **caractérisé en ce que** le flux asynchrone de données est converti à l'aide d'un circuit de convertisseur en un flux synchrone et continu de données, que, pour les données utiles du flux asynchrone de données, un nombre à déterminer préalablement d'emplacements de mémoire est prévu à l'intérieur du cadre de données, qu'un nombre variable de données utiles peut être affecté aux différents cadres de données à l'aide du circuit de convertisseur en fonction de la vitesse du flux asynchrone de données et que des données de protocole qui présentent des informations sur le nombre de données utiles contenues dans le cadre de données respectif sont respectivement affectées aux différents cadres de données à l'aide du circuit de convertisseur à une position préalablement déterminée dans le cadre de données.

2. Procédé selon la revendication 1, **caractérisé en ce que** les données de protocole contiennent des informations sur la nature des données utiles.

3. Procédé selon la revendication 1, **caractérisé en ce que** le flux asynchrone de données est généré par un premier microprocesseur, converti à l'aide d'un premier circuit de convertisseur en un flux de données synchrone et continu, transmis par l'intermédiaire du bus de données synchrone, reconverti à l'aide d'un deuxième circuit de convertisseur en un flux asynchrone de données et amené à un deuxième microprocesseur.

4. Procédé selon la revendication 1, **caractérisé en ce que** le bus synchrone est un bus I²-S continu.

5. Procédé selon la revendication 1, **caractérisé en ce qu'**à l'aide du circuit de convertisseur, des données de bypass du flux asynchrone de données qui ont une priorité plus élevée peuvent être insérées à l'aide d'un registre de bypass, de préférence dans le flux synchrone de données.

6. Circuit de transmission d'un flux asynchrone de données présentant des données utiles par l'intermédiaire d'un bus synchrone de données qui est prévu pour la transmission de cadres temporels disposés dans le multiplex temporel, **caractérisé en ce qu'**un circuit de convertisseur est prévu pour la conversion du flux asynchrone de données en un flux synchrone et continu de données, qu'à l'aide du circuit de convertisseur, un nombre à déterminer préalablement d'emplacements de mémoire peut être affecté à l'aide du circuit de convertisseur aux données utiles du flux asynchrone de données, qu'un nombre variable de données utiles peut être affecté aux différents cadres de données à l'aide du circuit de convertisseur en fonction de la vitesse du flux asynchrone de données et que des données de protocole qui présentent des informations sur le nombre des données utiles contenues dans le cadre de données respectif peuvent être affectées aux différents cadres de données à l'aide du circuit de convertisseur à une position préalablement déterminée respective dans le cadre de données.

7. Système électronique, en particulier système de navigation, avec un circuit selon la revendication 6, présentant:
- un premier microprocesseur qui génère un flux asynchrone de données utiles,
- un premier circuit de convertisseur pour la conversion du flux asynchrone de données utiles en un flux synchrone de données;
- un bus synchrone et continu de données, en particulier un bus I²-S, pour la transmission du flux synchrone de données;
- un deuxième circuit de convertisseur pour la reconversion du flux synchrone de données en un flux asynchrone de données;
et un deuxième microprocesseur pour le traitement du flux asynchrone de données reconverti.

8. Système électronique selon la revendication 7, **caractérisé en ce que** le premier microprocesseur est affecté à un calculateur de navigation d'un système de navigation, qui génère des données d'image asynchrones, que le bus de données est un bus optique et que le deuxième microprocesseur est affecté à un deuxième dispositif d'affichage d'un système de navigation.

9. Véhicule automobile avec un circuit selon la revendication 6.

10. Mise en oeuvre du procédé selon la revendication 1 de transmission de données d'image asynchrones entre un calculateur de navigation d'un système de navigation et un dispositif d'affichage d'un système de navigation.
